# EUROPEAN PATENT APPLICATION

(11) **EP 4 825 678 A1**
(43) Date of publication of application: **21.10.2026**
(21) Application number: 24911559.3
(22) Date of filing: 27.12.2024
(51) Int. Cl.: B60W 10/06, B60W 10/08, B60W 10/10, B60W 10/02, B60W 20/15, B60W 20/20

(54) **VEHICLE MODE SWITCHING METHOD, APPARATUS, AND SYSTEM, VEHICLE, COMPUTER PROGRAM, AND READABLE MEDIUM**

(30) Priority: 29.12.2023 CN 202311864289
(71) Applicant: Great Wall Motor Company Limited, Baoding, Hebei 071000 (CN)
(72) Inventor: ZHAO, Qing, Baoding, Hebei 071000 (CN); ZHENG, Yunlong, Baoding, Hebei 071000 (CN); CHANG, Xiao, Baoding, Hebei 071000 (CN); CHEN, Shujiang, Baoding, Hebei 071000 (CN); WANG, Chao, Baoding, Hebei 071000 (CN)
(74) Representative: Michalski Hüttermann & Partner mbB
(86) International application number: PCT/CN2024/143425
(87) International publication number: WO 2025/140643

(57) **Abstract**

The present application provides a vehicle mode switching method, apparatus, a system, vehicle, a computer program, and a readable medium, belonging to the field of vehicle control technologies. Embodiments of the present application is capable of, when a vehicle satisfies a mode switching condition for switching from a power split mode to a direct drive mode, maintaining a clutch in a closed state, and performing torque regulation on an engine and a first motor, so that when a first synchronizer satisfies a torque condition, speed regulation can be performed on the first motor, and then when the first synchronizer satisfies a speed condition, the first synchronizer can be controlled to switch from a power split gear to an engaged gear, thereby switching the vehicle from the power split mode to the direct drive mode. The embodiments of the present application can successfully complete a gear shifting operation of the first synchronizer without disengaging or engage the clutch, thereby shortening a mode switching duration while enabling the engine tso quickly output torque, improving the power response performance of the vehicle during the mode switching process.

## Description

### CROSS-REFERENCE TO RELATED DISCLOSURE

This application claims the priority of Chinese Patent Application No. 202311864289.7, filed with the China National Intellectual Property Administration on December 29, 2023, entitled "A VEHICLE MODE SWITCHING METHOD, SYSTEM, AND VEHICLE" the entire contents of which are incorporated herein by reference.

### TECHNICAL FIELD

The present application relates to the field of vehicle control technologies, and in particular, to a vehicle mode switching method, apparatus, a system, a vehicle, a computer program, and a computer-readable medium.

### BACKGROUND

With the rapid development of the automotive industry, in response to national policies on energy conservation, emission reduction, and carbon balance, traditional fuel vehicles are gradually transitioning towards hybrid vehicles. To adapt to different road conditions and driving demands, hybrid vehicles are typically equipped with multiple driving modes, including a direct drive mode and a power split mode. During vehicle operation, driving modes may switch between each other under certain conditions based on changes in road conditions and driving demands.

In the related art, when a vehicle switches from the power split mode to the direct drive mode, it usually requires the clutch to be disengaged first, followed by torque reduction and speed regulation operations on the engine. After these operations are completed, the clutch is re-engaged to finalize the mode transition. However, this method involves the process of disengaging and re-engaging the clutch, which leads to an interruption in engine power output. Consequently, not only does it cause the motor to stop generating electricity, but it also results in longer mode-switching times and delayed engine power response. This ultimately affects the overall vehicle dynamic performance.

### SUMMARY

Embodiments of the present application disclose the following technical solutions.

In a first aspect, the embodiments of the present application provides a vehicle mode switching method. The vehicle includes an engine, a clutch, a first motor, and a transmission. The transmission includes a power split mechanism, a first synchronizer, and a transmission input shaft. The engine is connected to a first input end of the power split mechanism via the clutch. The first motor is connected to a second input end of the power split mechanism. An output end of the power split mechanism is connected to the transmission input shaft. The first synchronizer is disposed between the first input end and the output end. The method includes:
when the vehicle satisfies a mode switch condition for switching from a power split mode to a direct drive mode, maintaining the clutch in an engaged gear, and performing torque regulation on the engine and the first motor, so that the first synchronizer satisfies a torque condition;
when the first synchronizer satisfies the torque condition, performing speed regulation on the first motor, so that the first synchronizer satisfies a speed condition; and
when the first synchronizer satisfies the speed condition, controlling the first synchronizer to switch from a power split gear to an engaged gear, so that the vehicle switches from the power split mode to the direct drive mode.

In some embodiments of the present application, the method further includes:
when the vehicle is in the power split mode, acquiring a current State of Charge of a traction battery, and determining whether a driver has a high power demand; and
when it is determined that the driver has the high power demand and the current State of Charge is greater than a charge threshold, determining that the vehicle satisfies the mode switch condition for switching from the power split mode to the direct drive mode.

In some embodiments of the present application, the step of determining whether the driver has a high power demand includes:
acquiring a current throttle opening and a current throttle opening change rate of an accelerator pedal; and
when the current throttle opening is greater than an opening threshold and the current throttle opening change rate is greater than a rate threshold, determining that the driver has the high power demand.

In some embodiments of the present application, the step of performing torque regulation on the engine and the first motor includes:
controlling, based on a preset torque regulation gradient, a current engine torque of the engine and a current motor torque of the first motor to follow a preset first target torque.

In some embodiments of the present application, the vehicle further includes a second motor, and the method further includes:
determining, based on the current engine torque and the current motor torque, a compensation torque for the second motor;
determining, based on the compensation torque and a current drive torque of the second motor, a target drive torque for the second motor; and
during the process of performing torque regulation on the engine and the first motor, controlling, based on the torque regulation gradient, the second motor to gradually increase from the current drive torque to the target drive torque.

In some embodiments of the present application, the method further includes:
when a first torque difference between the current engine torque and the first target torque is less than a first torque threshold, triggering timing of a first duration during which the first torque difference is less than the first torque threshold;
when a second torque difference between the current motor torque and the first target torque is less than a second torque threshold, triggering timing of a second duration during which the second torque difference is less than the second torque threshold; and
when the first duration is greater than a first time threshold and the second duration is greater than a second time threshold, determining that the first synchronizer satisfies the torque condition.

In some embodiments of the present application, the power split mechanism includes a ring gear, a sun gear, a plurality of planet gears meshed with the ring gear and the sun gear, and a planet carrier rotatably connected to the plurality of planet gears. The planet carrier serves as the first input end and is connected to the engine, the sun gear serves as the second input end and is connected to the first motor, the ring gear serves as the output end and is connected to the transmission input shaft, and the first synchronizer is disposed between the planet carrier and the ring gear. The step of performing speed regulation on the first motor includes:
when a current gear of the first synchronizer is the power split gear, determining a gear ratio between the planet carrier and the ring gear as a first gear ratio;
determining, based on a current engine speed of the engine and the first gear ratio, a target ring gear speed of the ring gear;
determining, based on the target ring gear speed and a second gear ratio between the ring gear and the sun gear, a target motor speed of the first motor; and
controlling a current motor speed of the first motor to follow the target motor speed.

In some embodiments of the present application, the method further includes:
determining, based on the current motor speed and the second gear ratio, a current ring gear speed of the ring gear;
determining, based on the current engine torque, a current planet carrier speed of the planet carrier; and
when a speed difference between the current ring gear speed and the current planet carrier speed is less than a speed difference threshold, determining that the first synchronizer satisfies the speed condition.

In some embodiments of the present application, the step of controlling the first synchronizer to switch from the power split gear to the engaged gear when the first synchronizer satisfies the speed condition includes:
when the first synchronizer satisfies the speed condition, determining a sum of the first target torque and a preset shift assist torque as a second target torque; and
controlling a current motor torque of the first motor to follow the second target torque, to assist the first synchronizer in shifting from the power split gear to the engaged gear.In a second aspect, based on the same inventive concept, an embodiment of the present application provides a vehicle mode switching apparatus. The vehicle includes an engine, a clutch, a first motor, and a transmission. The transmission includes a power split mechanism, a first synchronizer, and a transmission input shaft. The engine is connected to a first input end of the power split mechanism via the clutch. The first motor is connected to a second input end of the power split mechanism. An output end of the power split mechanism is connected to the transmission input shaft. The first synchronizer is disposed between the first input end and the output end. The apparatus includes:
a torque regulation module, configured to, when the vehicle satisfies a mode switch condition for switching from a power split mode to a direct drive mode, maintain the clutch in an engaged gear, and perform torque regulation on the engine and the first motor, so that the first synchronizer to satisfy a torque condition;
a speed regulation module, configured to, when the first synchronizer satisfies the torque condition, perform speed regulation on the first motor, so that the first synchronizer to satisfy a speed condition; and
a gear shift module, configured to, when the first synchronizer satisfies the speed condition, control the first synchronizer to switch from a power split gear to an engaged gear, so that the vehicle switches from the power split mode to the direct drive mode.

In some embodiments of the present application, the vehicle mode switching apparatus further includes:
an information acquisition submodule, configured to, when the vehicle is in the power split mode, obtain a current State of Charge of a traction battery, and determine whether a driver has a high power demand; and
a condition determination submodule, configured to, when it is determined that the driver has the high power demand and the current State of Charge is greater than a charge threshold, determine that the vehicle satisfies the mode switch condition for switching from the power split mode to the direct drive mode.

In some embodiments of the present application, the information acquisition submodule includes:
a pedal information acquisition unit, configured to obtain a current throttle opening and a current throttle opening change rate of an accelerator pedal; and
a power demand determination unit, configured to, when the current throttle opening is greater than an opening threshold and the current throttle opening change rate is greater than a rate threshold, determine that the driver has the high power demand.

In some embodiments of the present application, the torque adjustment module includes:
a torque adjustment submodule, configured to, based on a preset torque adjustment gradient, control a current engine torque of the engine and a current motor torque of the first motor to follow a preset first target torque.

In some embodiments of the present application, the vehicle further includes a second motor, and the vehicle mode switching apparatus further includes:
a compensation torque determination module, configured to determine a compensation torque for the second motor based on the current engine torque and the current motor torque;
a drive torque determination module, configured to determine a target drive torque for the second motor based on the compensation torque and a current drive torque of the second motor; and
a drive torque control module, configured to, during the process of performing torque adjustment on the engine and the first motor, based on the torque adjustment gradient, control the second motor to gradually increase from the current drive torque to the target drive torque.

In some embodiments of the present application, the vehicle mode switching apparatus further includes:
a first timing module, configured to, when a first torque difference between the current engine torque and the first target torque is less than a first torque threshold, trigger timing of a first duration during which the first torque difference is less than the first torque threshold;
a second timing module, configured to, when a second torque difference between the current motor torque and the first target torque is less than a second torque threshold, trigger timing of a second duration during which the second torque difference is less than the second torque threshold; and
a first condition determination module, configured to, when the first duration is greater than a first time threshold and the second duration is greater than a second time threshold, determine that the second synchronizer satisfies the first gear shift condition.

In some embodiments of the present application, the power split mechanism includes a ring gear, a sun gear, a plurality of planet gears meshed with the ring gear and the sun gear, and a planet carrier rotatably connected to the plurality of planet gears. The planet carrier serves as the first input end connected to the engine, the sun gear serves as the second input end connected to the first motor, the ring gear serves as the output end connected to the transmission input shaft, and the first synchronizer is disposed between the planet carrier and the ring gear. The speed regulation module includes:
a gear ratio determination submodule, configured to, when a current gear of the first synchronizer is the power split gear, determine a gear ratio between the planet carrier and the ring gear as a first gear ratio;
a target ring gear speed determination submodule, configured to determine a target ring gear speed of the ring gear based on a current engine speed of the engine and the first gear ratio;
a motor speed determination submodule, configured to determine a target motor speed of the first motor based on the target ring gear speed and a second gear ratio between the ring gear and the sun gear; and
a motor speed control submodule, configured to control a current motor speed of the first motor to follow the target motor speed.

In some embodiments of the present application, the vehicle mode switching apparatus further includes:
a current ring gear speed determination module, configured to determine a current ring gear speed of the ring gear based on the current motor speed and the second gear ratio;
a current planet carrier speed determination module, configured to determine a current planet carrier speed of the planet carrier based on the current engine torque; and
a second condition determination module, configured to, when a speed difference between the current ring gear speed and the current planet carrier speed is less than a speed difference threshold, determine that the first synchronizer satisfies the speed condition.

In some embodiments of the present application, the gear shift module includes:
a target torque determination submodule, configured to, when the first synchronizer satisfies the speed condition, determine a sum of the first target torque and a preset shift assist torque as a second target torque; and
a gear shift submodule, configured to control a current motor torque of the first motor to follow the second target torque, to assist the first synchronizer in switching from the power split gear to the engaged gear.

In a third aspect, an embodiment of the present application provides a vehicle mode switching system. The vehicle includes an engine, a clutch, a first motor, and a transmission. The transmission includes a power split mechanism, a first synchronizer, and a transmission input shaft. The engine is connected to a first input end of the power split mechanism via the clutch. The first motor is connected to a second input end of the power split mechanism. An output end of the power split mechanism is connected to the transmission input shaft. The first synchronizer is disposed between the first input end and the output end. The system includes a vehicle controllor, a transmission controller, a motor controller, and an engine controller.

Therein, the vehicle controllor is configured to, when the vehicle satisfies a mode switch condition for switching from a power split mode to a direct drive mode, send a clutch state hold request to the transmission controller, send an engine torque regulation request to the engine controller, and send a motor torque regulation request to the motor controller.

The transmission controller is configured to, in response to the clutch state hold request, maintain the clutch in an engaged gear.

The engine controller is configured to, in response to the engine torque regulation request, perform torque regulation on the engine, and the motor controller is configured to, in response to the motor torque regulation request, perform torque regulation on the first motor, so that the first synchronizer to satisfy a torque condition.

The vehicle controllor is further configured to, when the first synchronizer satisfies the torque condition, send a speed regulation request to the motor controller.

The motor controller is further configured to, in response to the speed regulation request, perform speed regulation on the first motor, so that the first synchronizer to satisfy a speed condition.

The vehicle controllor is further configured to, when the first synchronizer satisfies the speed condition, send a gear shift request to the transmission controller.

The transmission controller is further configured to, in response to the gear shift request, control the first synchronizer to switch from a power split gear to an engaged gear, so that the vehicle switches from the power split mode to the direct drive mode.

In a fourth aspect, based on the same inventive concept, an embodiment of the present application provides a vehicle, including the vehicle mode switching system proposed in the third aspect of the present application.

In a fifth aspect, an embodiment of the present application provides a computer program, including computer-readable codes. When the computer-readable codes are executed on a computing processing device, the computing processing device is configured to perform the vehicle mode switching method according to any one of the first aspect.

In a sixth aspect, an embodiment of the present application provides a computer-readable medium storing a computer program.

Compared with the prior art, the present application includes the following advantages.

The vehicle mode switching method provided by the embodiments of the present application can, when the vehicle satisfies a mode switch condition for switching from a power split mode to a direct drive mode, maintain the clutch in an engaged gear, and perform torque regulation on the engine and the first motor, so that when the first synchronizer satisfies a torque condition, speed regulation can be performed on the first motor, and further, when the first synchronizer satisfies a speed condition, the first synchronizer can be controlled to switch from a power split gear to an engaged gear, thereby switching the vehicle from a power split mode to a direct drive mode. By first performing torque regulation on the engine and the first motor, and then performing speed regulation on the first motor, the embodiments of the present application enable the gear shifting operation of the first synchronizer to be successfully completed without disengaging or engage the clutch during the vehicle mode switching process. Thus, the vehicle can switch from the power split mode to the direct drive mode more quickly and smoothly, effectively shortening the mode switching time while enabling the engine to output torque rapidly, thereby improving the vehicle power response performance during the mode switching process.

The above description is only an overview of the technical solutions of the present application. In order to understand the technical means of the present application more clearly, it can be implemented in accordance with the contents of the specification. In order to make the above and other objectives, features, and advantages of the present application more obvious and understandable, specific implementations of the present application are exemplified below.

### BRIEF DESCRIPTION OF THE DRAWINGS

In order to more clearly illustrate the technical solutions in the embodiments of the present application or the prior art, the drawings required for use in the description of the embodiments or the prior art will be briefly introduced below. Obviously, the drawings in the following description are some embodiments of the present application. For those of ordinary skill in the art, other drawings can be obtained based on these drawings without creative effort.
FIG. 1 is a schematic structural diagram of a hybrid vehicle according to an embodiment of the present application.
FIG. 2 is a step flowchart of a vehicle mode switching method according to an embodiment of the present application.
FIG. 3 is a schematic diagram of functional modules of a vehicle mode switching apparatus according to an embodiment of the present application.
FIG. 4 is a schematic structural diagram of a vehicle mode switching system according to an embodiment of the present application.
FIG. 5 is a schematic structural diagram of a vehicle according to an embodiment of the present application.
FIG. 6 is a block diagram schematically illustrating a computing processing device for executing a method according to the present application in an embodiment of the present application.
FIG. 7 schematically illustrates a storage unit for holding or carrying program codes for implementing the method according to the present application in an embodiment of the present application.

### DETAILED DESCRIPTION OF THE EMBODIMENTS

To make the objectives, technical solutions, and advantages of the embodiments of the present application clearer, the technical solutions in the embodiments of the present application will be described clearly and completely below with reference to the accompanying drawings in the embodiments of the present application. Obviously, the described embodiments are part of the embodiments of the present application, not all of them. Based on the embodiments in the present application, all other embodiments obtained by a person of ordinary skill in the art without creative efforts shall fall within the protection scope of the present application.

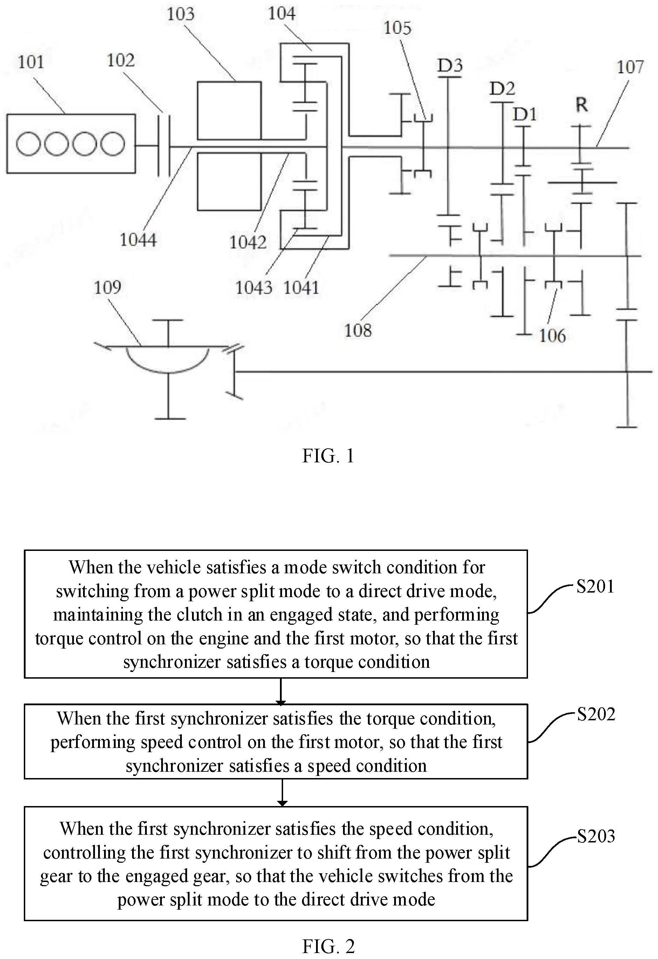

Referring to FIG. 1, FIG. 1 shows a schematic structural diagram of a hybrid vehicle according to an embodiment of the present application. The hybrid vehicle is provided with an engine 101, a clutch 102, a first motor 103, and a transmission on a front axle of the vehicle. The transmission includes a power split mechanism 104, a transmission input shaft 107, a transmission output shaft 108, a first synchronizer 105, and a second synchronizer 106. The engine 101 is connected to a first input end of the power split mechanism 104 via the clutch 102. The first motor 103 is connected to a second input end of the power split mechanism 104. An output end of the power split mechanism 104 is connected to the transmission input shaft 107.

The first synchronizer 105 is disposed between the first input end and the output end, and is configured to engage or disengage the first input end and the output end. Specifically, when the first synchronizer 105 is in an engaged gear, the first synchronizer 105 is configured to engage the first input end and the output end; and when the first synchronizer 105 is in a power split gear, the first synchronizer 105 is configured to disengage the first input end and the output end. It should be noted that the first synchronizer 105 is configured to control the vehicle to switch between a power split mode and other modes. That is, when the first synchronizer 105 is in the power split gear, the vehicle can be in the power split mode; when the first synchronizer 105 is in the engaged gear, the vehicle can be in other modes besides the power split mode, such as a direct drive mode, a series mode, or a pure electric all-wheel drive mode.

The second synchronizer 106 is disposed between the transmission input shaft 107 and the transmission output shaft 108, and is configured to engage or disengage the transmission input shaft 107 and the transmission output shaft 108. Specifically, when the second synchronizer 106 is in an engaged gear, the second synchronizer 106 is configured to engage the transmission input shaft 107 and the transmission output shaft 108; and when the second synchronizer 106 is in a neutral gear, the second synchronizer 106 is configured to disengage the transmission input shaft 107 and the transmission output shaft 108.

Further, the transmission output shaft 108 is also connected to front axle wheels via a front differential 109, for transmitting power to the front axle wheels through the front differential 109 to drive the front axle of the vehicle. The hybrid vehicle is also provided with a second motor (not shown in the figures) on a rear axle of the vehicle, and the second motor is configured to transmit power to rear axle wheels through a rear differential (not shown in the figure) to drive the rear axle of the vehicle.

Since the hybrid vehicle adopting the above architecture is configured with the power split mechanism 104, and the power split mechanism 104 is simultaneously connected to the engine 101, the first motor 103, and the transmission input shaft 107, the vehicle can have multiple driving modes including the direct drive mode and the power split mode. Furthermore, by changing the gear state of the first synchronizer 105, switching between different driving modes of the vehicle can be achieved.

Specifically, in the power split mode, the first synchronizer 105 is in the power split gear. Meanwhile, the first synchronizer is in a disengaged state for disconnecting the first input end and the output end. The second synchronizer 106 is in an engaged gear. The engine 101 is in a driving state. The clutch 102 is in a closed state. The first motor 103 is in a power generation state, and the second motor is in a driving state. At this time, the driving force output by the engine 101 is transmitted to the power split mechanism 104 through the clutch 102 and the first input end, and the power split mechanism 104 transmits a part of the driving force to the first motor 103 through the second input end to drive the first motor 103 to generate electricity (at this time, the first motor 103 outputs negative torque), and the generated electrical energy is provided to the traction battery for charging. The power split mechanism 104 also transmits another part of the driving force to the transmission input shaft 107 through the output end, and the transmission input shaft 107 transmits this part of the driving force to the front axle of the vehicle sequentially through the second synchronizer 106, the transmission output shaft 108, and the front differential 109 to drive the vehicle. A distribution ratio of the driving force can be set according to actual needs, that is, in the power split mode, part of the output power of the engine 101 is configured to drive the first motor 103 to charge the traction battery, and another part of the output power is configured to directly drive the vehicle.

In the direct drive mode, the first synchronizer 105 is in the engaged gear, and the second synchronizer 106 is in the engaged gear. The engine 101 is in a driving state. The clutch 102 is in a closed state. The first motor 103 is usually in a driving state, and the second motor is in a driving state. At this time, the driving force output by the engine 101 is transmitted to the transmission input shaft 107 sequentially through the first input end of the power split mechanism, the first synchronizer 105, and the output end, while the driving force output by the first motor 103 is transmitted to the transmission input shaft 107 through the second input end and the output end of the power split mechanism, and the transmission input shaft 107 transmits this part of the driving force to the front axle of the vehicle sequentially through the second synchronizer 106, the transmission output shaft 108, and the front differential 109 to drive the vehicle. Since the engine 101 and the first motor 103 can jointly drive the front axle of the vehicle in the direct drive mode, the total driving force of the vehicle in the direct drive mode is usually greater than that in the power split mode.

It can be seen that when the vehicle switches from the power split mode to the direct drive mode, the first synchronizer 105 needs to be switched from the power split gear to the engaged gear.

In the related art, during the process of switching the vehicle from the power split mode to the direct drive mode, it is usually necessary to first disengage the clutch 102, then perform torque reduction and speed regulation on the engine 101. After the torque reduction and speed regulation are completed, the first synchronizer 105 is switched from the power split gear to the engaged gear, and the clutch 102 is re-engaged to complete the mode switching. However, this method requires additional control to engage or disengage the clutch 102 during the mode switching process. On one hand, this leads to a longer switching chain and a longer mode switching time; on the other hand, the engine 101 needs to wait for the clutch 102 to be re-engaged before outputting torque, resulting in untimely power response of the engine 101, thereby affecting the overall vehicle power response performance during the mode switching process.

Aiming at the problem of poor overall vehicle power response performance when a hybrid vehicle switches from the power split mode to the direct drive mode, the present application aims to provide the vehicle mode switching method. By first performing torque regulation on the engine 101 and the first motor 103, and then performing speed regulation on the first motor 103, the gear shifting operation of the first synchronizer 105 can be completed without disengaging or engage the clutch 102 during the vehicle mode switching process. Thus, the vehicle can switch from the power split mode to the direct drive mode more quickly and smoothly, effectively shortening the mode switching time while allowing the engine 101 to output torque quickly, thereby improving the power response performance of the vehicle during the mode switching process.

Referring to FIG. 2, FIG. 2 is a vehicle mode switching method according to the present application is shown, which is applied to a hybrid vehicle adopting the above architecture. The method may include the following steps.

S201: when the vehicle satisfies a mode switch condition for switching from a power split mode to a direct drive mode, maintaining the clutch 102 in a closed state, and performing torque regulation on the engine 101 and the first motor 103, so that the first synchronizer 105 satisfies a torque condition.

It should be noted that the execution subject of this embodiment may be a computing service device with data processing, network communication, and program running functions, or an electronic device with the above functions such as a driving computer, an on-board computer, an Electronic Control Unit (ECU) or a Hybrid Control Unit (HCU). This embodiment will take the HCU as the execution subject for explanation. It should be noted that this implementation does not impose specific restrictions on the execution subject of the vehicle.

In this implementation, the HCU is capable of acquiring operating condition information and driver operation information of the vehicle, and then determining, based on the operating condition information and the driver operation information, whether the vehicle needs to switch from the power split mode to the direct drive mode, thereby achieving intelligent switching of the vehicle mode.

In this implementation, after determining that the vehicle satisfies the mode switch condition for switching from the power split mode to the direct drive mode, the HCU sends a clutch state maintenance request to a transmission controller, so that the transmission controller responds to the clutch state maintenance request and maintains the clutch 102 in a closed state. Simultaneously, the HCU sends an engine torque regulation request to the engine controller, so that the engine controller responds to the engine torque regulation request and performs torque regulation on the engine 101. The HCU also sends a motor torque regulation request to the motor controller, so that the motor controller responds to the motor torque regulation request and performs torque regulation on the first motor 103.

It should be noted that when the vehicle switches from the power split mode to the direct drive mode, the first synchronizer 105 needs to be switched from the power split gear to the engaged gear. If the torque applied to the first synchronizer 105 is too large when the first synchronizer 105 is being engaged, it may cause the first synchronizer 105 to fail to engage or be damaged during engagement.

In this implementation, to prevent the first synchronizer 105 from failing to engage smoothly, torque regulation will be performed on the engine 101 and the first motor 103, so that the torque jointly applied to the first synchronizer 105 by the engine 101 and the first motor 103 through the power split mechanism 104 is a small value, preferably zero. Thus, without disengaging the clutch 102, the torque at the first synchronizer 105 can be reduced to the torque required for engagement, thereby enabling the first synchronizer 105 to satisfy the torque condition.

It should be noted that the torque condition is configured to characterize a condition under which the first synchronizer 105 can be switched from the power split gear to the engaged gear in terms of torque.

S202: when the first synchronizer 105 satisfies the torque condition, performing speed regulation on the first motor 103, so that the first synchronizer 105 satisfies a speed condition.

In this implementation, after determining that the first synchronizer 105 satisfies the torque condition, the HCU triggers speed regulation for the first motor 103 and sends a speed regulation request including a target motor speed to the motor controller, so that the motor controller responds to the speed regulation request and performs speed regulation on the current motor speed of the first motor 103, enabling the first synchronizer 105 to satisfy the speed condition.

It should be noted that the first synchronizer 105 is disposed between the first input end and the output end of the power split mechanism 104, and is configured to adjust a gear ratio between the first input end of the power split mechanism 104 and the transmission input shaft 107.

In the power split mode, the first synchronizer 105 is in the power split gear. At this time, the gear ratio between the first input end of the power split mechanism 104 and the transmission input shaft 107 is usually set to a value greater than 1, such as 2:1. When the vehicle switches from the power split mode to the direct drive mode, the first synchronizer 105 needs to be engaged to the engaged gear. At this time, the first input end and the output end of the power split mechanism 104 are in a locked state, and the output end is connected to the transmission input shaft 107, so that the gear ratio between the first input end and the transmission input shaft 107 is 1:1. To prevent damage to the first synchronizer 105 during engagement, a speed difference between two ends of the first synchronizer 105 is required to be a small value, ideally zero.

In this implementation, considering that the first motor 103 is connected to the power split mechanism 104 and torque balance at the first synchronizer 105 has been achieved through the engine 101 and the first motor 103, by performing speed regulation on the first motor 103, the speed regulation at both ends of the first synchronizer 105 can also be achieved while maintaining the clutch 102 closed, thereby enabling the first synchronizer 105 to satisfy the speed condition.

It should be noted that the speed condition is configured to characterize a condition under which the first synchronizer 105 can be switched from the power split gear to the engaged gear in terms of speed.

S203: when the first synchronizer 105 satisfies the speed condition, controlling the first synchronizer 105 to switch from a power split gear to an engaged gear, so that the vehicle switches from the power split mode to the direct drive mode.

In this implementation, since the first synchronizer 105 has already satisfied the torque condition in advance, after detecting that the first synchronizer 105 also satisfies the speed condition, the HCU sends a gear shift request indicating that the target gear is the engaged gear to the TCU, so that the TCU responds to the gear shift request and controls the first synchronizer 105 to switch from the power split gear to the engaged gear.

In this implementation, by first performing torque regulation on the engine 101 and the first motor 103, and then performing speed regulation on the first motor 103, the gear shifting operation of the first synchronizer 105 can be completed while simultaneously satisfying the torque condition and the speed condition, thereby effectively ensuring the safety of the gear shifting of the first synchronizer 105.

In this implementation, after determining that the first synchronizer 105 has switched to the engaged gear, the HCU sets a current driving mode of the vehicle from the power split mode to the direct drive mode, and then controls the engine 101, the first motor 103, and the second motor to output torque according to a torque distribution strategy in the direct drive mode.

Specifically, the torque distribution strategy includes a front axle torque distribution strategy and a rear axle torque output strategy. The HCU is configured to execute the front axle torque distribution strategy, controlling the engine 101 to output a first torque and the first motor 103 to output a second torque to jointly drive the front axle of the vehicle; at the same time, the HCU is also configured to execute the rear axle torque output strategy, controlling the second motor to output a third torque to drive the rear axle of the vehicle.

It should be noted that the second torque output by the first motor 103 can be a positive torque or a negative torque. For example, when the driver's demanded torque is large and the engine 101 and the second motor cannot effectively meet the driver's power demand, the first motor 103 can output a positive torque to ensure the vehicle's power performance; when the driver's demanded torque is small, the first motor 103 can output a negative torque to adjust an operating point of the engine 101, so that the engine 101 can operate in an optimal economic range.

The vehicle mode switching method provided by the embodiments of the present application, by first performing torque regulation on the engine 101 and the first motor 103, and then performing speed regulation on the first motor 103, enables the gear shifting operation of the first synchronizer 105 to be successfully completed without disengaging or engage the clutch 102 during the vehicle mode switching process. Thus, the vehicle can switch from the power split mode to the direct drive mode more quickly and smoothly, effectively shortening the mode switching time while allowing the engine 101 to output torque quickly, thereby improving the power response performance of the vehicle during the mode switching process.

Exemplarily, the vehicle mode switching method may further include the following steps.

S301: when the vehicle is in the power split mode, acquiring a current State of Charge of a traction battery, and determining whether the driver has a high power demand.

In this implementation, when the vehicle is in the power split mode, the HCU will obtain operating condition information and driver operation information of the vehicle in real time to determine whether it is necessary to control the vehicle to switch from the power split mode to the direct drive mode. The operating condition information may specifically include the current SOC (State of Charge, also known as remaining charge) of the traction battery.

In this implementation, by detecting the current State of Charge of the traction battery, it is possible to effectively determine whether the traction battery has sufficient remaining charge to support the vehicle operating in the direct drive mode. At the same time, by detecting the driver operation information, it is possible to effectively determine whether the driver has a high power demand.

In a specific implementation, the driver operation information may specifically include a current throttle opening and a current throttle opening change rate of an accelerator pedal. Furthermore, when the HCU detects that the current throttle opening is greater than an opening threshold and the current throttle opening change rate is greater than a rate threshold, it will determine that the driver has a high power demand.

In this implementation, by comprehensively considering the current throttle opening change rate based on the current throttle opening, the driver's high power demand can be identified more accurately, thereby effectively avoiding the phenomenon of mode misswitching.

S302: when it is determined that the driver has a high power demand and the current State of Charge is greater than a charge threshold, determining that the vehicle satisfies the mode switch condition for switching from the power split mode to the direct drive mode.

In this implementation, if the HCU simultaneously detects that the driver has a high power demand and the current State of Charge is greater than the charge threshold, it will automatically control the vehicle to switch from the power split mode to the direct drive mode, thereby achieving automatic switching of the vehicle mode and quickly and effectively meeting the driver's power demand.

Exemplarily, the step of performing torque regulation on the engine 101 and the first motor 103 in S201 may specifically include the following sub-steps.

S201-1: controlling, based on a preset torque regulation gradient, a current engine torque of the engine 101 and a current motor torque of the first motor 103 to follow a preset first target torque.

It should be noted that the first target torque represents torque at which the first synchronizer 105 can disengage from the power split gear and engage into the engaged gear. Specifically, the first target torque can be set based on actual shift requirements. For example, to maximize the service life of the first synchronizer 105, the first target torque can be set to zero; or to maximize the shift speed, the first target torque can be set to maximum torque capable of achieving gear engagement; or the first target torque can be set to a torque between zero and the maximum torque, thereby improving shift speed to a certain extent while ensuring the service life of the first synchronizer 105.

In this embodiment, after determining the first target torque, the HCU will activate a torque control mode of the motor controller, so that the motor controller adjusts the current motor torque of the first motor 103 to the first target torque; at the same time, the HCU will also activate a torque control mode of the engine controller, so that the ECU adjusts the current engine torque of the engine 101 to the first target torque.

In a specific implementation, the current engine torque of the engine 101 and the current motor torque of the first motor 103 can be gradually adjusted to reach the first target torque according to a preset torque regulation gradient. The torque regulation gradient represents an amount of torque change per unit time, for example, it can be set to 200 N·m/s.

In this embodiment, by performing torque regulation on the engine 101 and the first motor 103 according to the torque regulation gradient, it is possible to avoid drastic torque changes that could affect driving stability of the vehicle.

Exemplarily, the vehicle further includes a second motor, and the vehicle mode switching method may further include the following steps.

S401: determining, based on the current engine torque and the current motor torque, a compensation torque for the second motor.

In this embodiment, considering that during the torque regulation process of the engine 101 and the first motor 103, the front axle torque will continuously decrease. To ensure the power demand of the entire vehicle during the mode switching process, torque compensation will be performed through the second motor.

In this embodiment, since the current motor torque is a negative torque and is configured to offset a portion of the positive torque of the current engine torque, the HCU can determine a sum of the current engine torque and the current motor torque as the compensation torque for the second motor.

In one example, before performing torque regulation on the engine 101 and the first motor 103, if the current engine torque is 800 N·m and the current motor torque is -300 N·m, then the compensation torque for the second motor is 500 N·m.

S402: determining, based on the compensation torque and a current drive torque of the second motor, a target drive torque for the second motor.

In this embodiment, the HCU will further superimpose the compensation torque on the basis of the current drive torque of the second motor to obtain the target drive torque for the second motor, thereby enabling the second motor to supplement the torque reduced on the front axle of the vehicle at the rear axle.

S403: during the torque regulation process of the engine 101 and the first motor 103, controlling, based on the torque regulation gradient, the second motor to gradually increase from the current drive torque to the target drive torque.

In this embodiment, during the process of adjusting the torque of the engine 101 and the first motor 103 according to the torque regulation gradient, the HCU will also synchronously control the second motor to perform torque compensation according to the same torque regulation gradient.

In one example, the torque regulation gradient is set to 200 N·m/s, and the first target torque is set to 0 N·m. If the HCU detects that the engine 101 outputs torque of 800 N·m, the first motor 103 outputs torque of -300 N·m, and the second motor outputs torque of 400 N·m, and then detects that the vehicle meets the mode switch condition, the HCU will control the engine 101 to gradually decrease from 800 N·m to 0 N·m according to the torque regulation gradient of 200 N·m/s, and control the first motor 103 to gradually increase from -300 N·m to 0 N·m. Meanwhile, the HCU calculates the compensation torque for the second motor as 500 N·m and the target drive torque as 900 N·m, and then synchronously controls the second motor to gradually increase from 400 N·m to 900 N·m according to the torque regulation gradient of 200 N·m/s.

In this embodiment, by performing torque compensation through the second motor, the overall vehicle power performance can be maintained consistent during the mode switching process, thereby effectively meeting the driver's power demand during the mode switching process, while avoiding abnormal deceleration or jerking of the vehicle.

Exemplarily, the vehicle mode switching method may further include the following steps.

S501: when a first torque difference between the current engine torque and the first target torque is less than a first torque threshold, triggering timing of a first duration during which the first torque difference is less than the first torque threshold.

In this embodiment, during the torque regulation process of the engine 101, the HCU will acquire the current engine torque fed back in real-time by the ECU. Then, when it detects that the first torque difference between the current engine torque and the first target torque is less than the first torque threshold, it triggers cumulative timing for the first duration through a first timer, and then, based on the first duration, determines whether the engine 101 is operating stably at the first target torque.

S502: when a second torque difference between the current motor torque and the first target torque is less than a second torque threshold, triggering timing of a second duration during which the second torque difference is less than the second torque threshold.

In this embodiment, during the torque regulation process of the first motor 103, the HCU will acquire the current motor torque of the first motor 103 fed back in real-time by the motor controller. Then, when it detects that the second torque difference between the current motor torque and the first target torque is less than the second torque threshold, it triggers cumulative timing for the second duration through a second timer, and then, based on the second duration, determines whether the first motor 103 is operating stably at the first target torque.

S503: when the first duration is greater than a first duration threshold and the second duration is greater than a second duration threshold, determining that the first synchronizer 105 satisfies the torque condition.

In this embodiment, if the HCU detects that both the first duration and the second duration are greater than their respective corresponding duration thresholds, it considers that both the engine 101 and the first motor 103 are operating stably at the first target torque, and then determines that the first synchronizer 105 satisfies the torque condition.

In this embodiment, by monitoring the first duration and the second duration, it is possible to effectively avoid controlling the first synchronizer 105 to perform a gear engagement operation when there is an abnormal torque fluctuation in the engine 101 or the first motor 103, thereby ensuring the shift safety of the first synchronizer 105.

In a feasible implementation, referring to FIG. 1, the power split mechanism 104 may specifically include a ring gear 1041, a sun gear 1042, a plurality of planet gears 1043 meshed with the ring gear 1041 and the sun gear 1042, and a planet carrier 1044 rotatably connected to the plurality of planet gears 1043. The planet carrier 1044 serves as a first input end of the power split mechanism 104 and is connected to the engine 101. The sun gear 1042 serves as a second input end of the power split mechanism 104 and is connected to the first motor 103. The ring gear 1041 serves as an output end of the power split mechanism 104 and is connected to the transmission input shaft 107. The first synchronizer 105 is arranged between the planet carrier 1044 and the ring gear 1041.

It should be noted that in the power split mode, the first synchronizer 105 is in the power split gear. At this time, the planet carrier 1044 and the ring gear 1041 are in a disconnected state. The driving force output by the engine 101 is transmitted to the planet carrier 1044 through the clutch 102. The planet carrier 1044 transmits a part of the driving force to the first motor 103 sequentially through the plurality of planet gears 1043 and the sun gear 1042, to drive the first motor 103 to charge the traction battery; at the same time, the planet carrier 1044 transmits the other part of the driving force sequentially through the plurality of planet gears 1043, the ring gear 1041, the transmission input shaft 107, the second synchronizer 106, the transmission output shaft 108, and the front differential 109 to the front axle of the vehicle, to drive the vehicle.

In the direct drive mode, the first synchronizer 105 is in the engaged gear. At this time, the planet carrier 1044 and the ring gear 1041 are in a locked state. The driving force output by the engine 101 is transmitted to the transmission input shaft 107 sequentially through the planet carrier 1044, the first synchronizer 105, and the ring gear 1041. The driving force output by the first motor 103 is transmitted to the transmission input shaft 107 through the sun gear 1042, the plurality of planet gears 1043, and the ring gear 1041. That is, the engine 101 and the first motor 103 transmit the driving force together to the transmission input shaft 107 via two different power paths. Then, the transmission input shaft 107 transmits this part of the driving force to the front axle of the vehicle sequentially through the second synchronizer 106, the transmission output shaft 108, and the front differential 109, to drive the vehicle.

Based on the above structure, the step of adjusting the speed of the first motor 103 in S202 may specifically include the following sub-steps.

S202-1: when a current gear of the first synchronizer 105 is the power split gear, determining a gear ratio between the planet carrier 1044 and the ring gear 1041 as a first gear ratio.

It should be noted that since the first synchronizer 105 is arranged between the planet carrier 1044 and the ring gear 1041, it is necessary to adjust a rotational speed between the planet carrier 1044 and the ring gear 1041 so that a speed difference across the first synchronizer 105 is less than a preset speed difference threshold. Since the planet carrier 1044 is connected to the engine 101, the rotational speed of the planet carrier 1044 is the engine speed; and since the ring gear 1041 is connected to the first motor 103 through the plurality of planet gears 1043 and the sun gear 1042, the rotational speed of the ring gear 1041 can be converted to a rotational speed of the first motor 103. Thus, while maintaining the engine speed unchanged, only the speed of the first motor 103 needs to be adjusted to achieve the adjustment of the speed across the first synchronizer 105, so that the first synchronizer 105 satisfies the speed condition.

In this embodiment, considering that the gear ratio between the planet carrier 1044 and the ring gear 1041 is different when the first synchronizer 105 is in different gears, the gear ratio between the planet carrier 1044 and the ring gear 1041 will first be determined as the first gear ratio based on the current gear of the first synchronizer 105.

S202-2: determining, based on a current engine speed of the engine 101 and the first gear ratio, a target ring gear speed for the ring gear 1041.

In this embodiment, the HCU uses the current engine speed of the engine 101 as a speed regulation reference to adjust the speed of the first motor 103, thus eliminating the need to adjust the engine speed. Then, based on the current engine speed of the engine 101 and the first gear ratio, the target ring gear speed for the ring gear 1041 can be determined.

S202-3: determining, based on the target ring gear speed and a second gear ratio between the ring gear 1041 and the sun gear 1042, a target motor speed of the first motor 103.

In this embodiment, according to the second gear ratio between the ring gear 1041 and the sun gear 1042, the target ring gear speed can be further converted into the target motor speed required for the first motor 103.

In a specific implementation, the target motor speed can be calculated according to the following formula: ${n}_{1} = {n}_{0} \times {i}_{1} \times {i}_{2}$ (1);
where n₁ represents the target motor speed of the first motor 103, n₀ represents the current engine speed of the engine 101, i₁ represents the first gear ratio, which indicates the gear ratio between the planet carrier 1044 and the ring gear 1041 when the first synchronizer 105 is in the power split gear, and i₂ represents the second gear ratio between the ring gear 1041 and the sun gear 1042.

S202-4: controlling a current motor speed of the first motor 103 to follow the target motor speed.

In this embodiment, while sending a speed regulation request containing the target motor speed to the motor controller, the HCU will also send a speed control flag to the motor controller, so that the motor controller controls the first motor 103 to switch from the torque control mode to the speed control mode, thereby achieving precise control of the speed of the first motor 103.

In this embodiment, after receiving the speed regulation request and switching to the speed control mode, the motor controller will activate a proportional-integral (PI) speed loop for the first motor 103 to control the current motor speed of the first motor 103 to follow the target motor speed through closed-loop control.

In a specific implementation, a preset PI regulation strategy can be configured to achieve closed-loop control of the motor speed. Specifically, the motor controller has a built-in proportional controller and a built-in integral controller. The motor controller will first calculate the first speed difference between the target motor speed and the current motor speed. Then, the motor controller inputs the current motor speed and the first speed difference into the proportional controller to output a proportional regulation value, and inputs the current motor speed and the first speed difference into the integral controller to output an integral regulation value. Then, based on the proportional regulation value and the integral regulation value, the speed of the first motor 103 is adjusted.

In this embodiment, by comprehensively considering the current gear of the first synchronizer 105 and the gear ratio between the first motor 103 and the engine 101, accurate calculation of the target motor speed can be achieved. At the same time, by performing closed-loop control of the motor speed, rapid and precise control of the current motor speed can be achieved, thereby effectively balancing the speed difference across the first synchronizer 105 and ensuring that the first synchronizer 105 can smoothly engage into the target gear.

In a feasible implementation, the vehicle mode switching method may further include the following steps.

S601: determining, based on the current motor speed and the second gear ratio, a current ring gear speed of the ring gear.

In this embodiment, since the first motor 103 is connected to the sun gear 1042, the current ring gear speed of the ring gear 1041 can be calculated in real-time based on the current motor speed and the second gear ratio between the ring gear 1041 and the sun gear 1042.

S602: determining, based on the current engine torque, a current planet carrier speed of the planet carrier.

In this embodiment, since the engine 101 is connected to the planet carrier 1044, the current engine speed can be directly determined as the current planet carrier speed.

S603: when a speed difference between the current ring gear speed and the current planet carrier speed is less than a speed difference threshold, determining that the first synchronizer 105 satisfies the speed condition.

In this embodiment, since the first synchronizer 105 is arranged between the ring gear 1041 and the planet carrier 1044, by calculating the speed difference between the current ring gear speed and the current planet carrier speed, the speed difference across the first synchronizer 105 can be obtained in real-time. Then, when it is detected that the speed difference is less than the speed difference threshold, it indicates that the first synchronizer 105 satisfies the speed condition.

In this embodiment, by monitoring the speed difference across the first synchronizer 105 in real-time, the shift safety of the first synchronizer 105 can be effectively ensured.

Exemplarily, S203 may specifically include the following sub-steps,

S203-1: when the first synchronizer 105 satisfies the speed condition, determining a sum of the first target torque and a preset shift assist torque as a second target torque.

In this embodiment, considering that when the first synchronizer 105 switches from the power split gear to the engaged gear, the first synchronizer 105 is switched from a disengaged state to a locked state. By superimposing the shift assist torque on the basis of the first target torque and controlling the first motor 103 to output the second target torque, the first motor 103 can assist the first synchronizer 105 in successfully completing the shift operation. Here, the shift assist torque can be set to 2 N·m.

S203-1: controlling the current motor torque of the first motor 103 to follow the second target torque to assist the first synchronizer 105 in shifting from the power split gear to the engaged gear.

In a specific implementation, the HCU sends a second motor torque regulation request containing the second target torque to the motor controller, so that the motor controller, in response to the second motor torque regulation request, performs torque regulation on the first motor 103 to cause the first motor 103 to output the second target torque. When the first target torque is set to zero, the second target torque is the shift assist torque.

In this embodiment, by controlling the first motor 103 to further superimpose the shift assist torque on the basis of the first target torque, the first synchronizer 105, with the assistance of the first motor 103, can effectively improve shift efficiency while avoiding the phenomenon of shift failure of the first synchronizer 105.

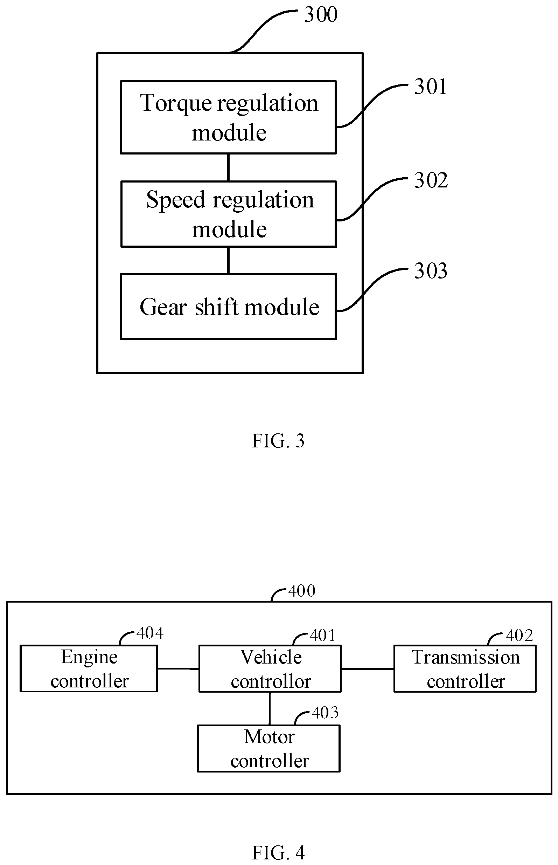

In a second aspect, based on the same inventive concept, referring to FIG. 3, an embodiment of the present application provides a vehicle mode switching apparatus 300. The vehicle includes an engine 101, a clutch 102, a first motor 103, and a transmission. The transmission includes a power split mechanism 104, a first synchronizer 105, and a transmission input shaft 107. The engine 101 is connected to a first input end of the power split mechanism 104 via the clutch 102. The first motor 103 is connected to a second input end of the power split mechanism 104. An output end of the power split mechanism 104 is connected to the transmission input shaft 107. The first synchronizer 105 is disposed between the first input end and the output end. The vehicle mode switching apparatus 300 includes:
a torque regulation module 301, configured to, when the vehicle satisfies a mode switch condition for switching from a power split mode to a direct drive mode, maintain the clutch 102 in a closed state and perform torque regulation on the engine 101 and the first motor 103, so that the first synchronizer 105 satisfies a torque condition;
a speed regulation module 302, configured to, when the first synchronizer 105 satisfies the torque condition, perform speed regulation on the first motor 103, so that the first synchronizer 105 satisfies a speed condition;
a gear shift module 303, configured to, when the first synchronizer 105 satisfies the speed condition, control the first synchronizer 105 to shift from a power split gear to an engaged gear, so that the vehicle switches from the power split mode to the direct drive mode.

Exemplarily, the vehicle mode switching apparatus 300 further includes:
an information acquisition submodule, configured to, when the vehicle is in a power split mode, acquire a current State of Charge of a traction battery, and determine whether a driver has a high power demand; and
a condition determination submodule, configured to, when it is determined that the driver has the high power demand and the current State of Charge is greater than a charge threshold, determine that the vehicle satisfies a mode switch condition for switching from the power split mode to a direct drive mode.

Exemplarily, the information acquisition submodule includes:
a pedal information acquisition unit, configured to acquire a current throttle opening and a current throttle opening change rate of an accelerator pedal; and
a power demand determination unit, configured to, when the current throttle opening is greater than an opening threshold and the current throttle opening change rate is greater than a rate threshold, determine that the driver has the high power demand.

Exemplarily, the torque regulation module 301 includes:
a torque regulation submodule, configured to control, based on a preset torque regulation gradient, a current engine torque of the engine 101 and a current motor torque of the first motor 103 to follow a preset first target torque.

Exemplarily, the vehicle further includes a second motor, and the vehicle mode switching apparatus 300 further includes:
a compensation torque determination module, configured to determine, based on the current engine torque and the current motor torque, a compensation torque for the second motor;
a drive torque determination module, configured to determine, based on the compensation torque and a current drive torque of the second motor, a target drive torque for the second motor; and
a drive torque control module, configured to, during the torque regulation process for the engine 101 and the first motor 103, control, based on the torque regulation gradient, the second motor to gradually increase from the current drive torque to the target drive torque.

Exemplarily, the vehicle mode switching apparatus 300 further includes:
a first timing module, configured to, when a first torque difference between the current engine torque and the first target torque is less than a first torque threshold, trigger timing of a first duration during which the first torque difference is less than the first torque threshold;
a second timing module, configured to, when a second torque difference between the current motor torque and the first target torque is less than a second torque threshold, trigger timing of a second duration during which the second torque difference is less than the second torque threshold; and
a first condition determination module, configured to, when the first duration is greater than a first duration threshold and the second duration is greater than a second duration threshold, determine that the second synchronizer 106 satisfies a first gear shift condition.

Exemplarily, the power split mechanism 104 includes a ring gear, a sun gear, a plurality of planet gears meshed with the ring gear and the sun gear, and a planet carrier rotatably connected to the plurality of planet gears. The planet carrier 1044 serves as a first input end of the power split mechanism 104 and is connected to the engine 101. The sun gear 1042 serves as a second input end of the power split mechanism 104 and is connected to the first motor 103. The ring gear 1041 serves as an output end of the power split mechanism 104 and is connected to the transmission input shaft 107. The first synchronizer 105 is disposed between the planet carrier 1044 and the ring gear 1041. The speed regulation module 302 includes:
a gear ratio determination submodule, configured to, when a current gear of the first synchronizer 105 is a power split gear, determine a gear ratio between the planet carrier and the ring gear as a first gear ratio;
a target ring gear speed determination submodule, configured to determine, based on a current engine speed of the engine 101 and the first gear ratio, a target ring gear speed of the ring gear;
a motor speed determination submodule, configured to determine, based on the target ring gear speed and a second gear ratio between the ring gear and the sun gear, a target motor speed of the first motor 103; and
a motor speed control submodule, configured to control a current motor speed of the first motor 103 to follow the target motor speed.

Exemplarily, the vehicle mode switching apparatus 300 further includes:
a current ring gear speed determination module, configured to determine, based on the current motor speed and the second gear ratio, a current ring gear speed of the ring gear;
a current planet carrier speed determination module, configured to determine, based on the current engine torque, a current planet carrier speed of the planet carrier; and
a second condition determination module, configured to, when a speed difference between the current ring gear speed and the current planet carrier speed is less than a speed difference threshold, determine that the first synchronizer 105 satisfies a speed condition.

Exemplarily, the gear shift module 303 includes:
a target torque determination submodule, configured to, when the first synchronizer 105 satisfies the speed condition, determine a sum of the first target torque and a preset shift assist torque as a second target torque; and
a gear shift submodule, configured to control a current motor torque of the first motor 103 to follow the second target torque, to assist the first synchronizer 105 in shifting from the power split gear to an engaged gear.

It should be noted that, for the specific implementation of the vehicle mode switching apparatus 300 according to the embodiment of the present application, reference is made to the specific implementation of the vehicle mode switching method proposed in the first aspect of the embodiment of the present application, and details are not repeated here.

In a third aspect, based on the same inventive concept, referring to FIG. 4, an embodiment of the present application provides a vehicle mode switching system 400. The vehicle includes an engine 101, a clutch 102, a first motor 103, and a transmission. The transmission includes a power split mechanism 104, a first synchronizer 105, and a transmission input shaft 107. The engine 101 is connected to a first input end of the power split mechanism 104 via the clutch 102. The first motor 103 is connected to a second input end of the power split mechanism 104. An output end of the power split mechanism 104 is connected to the transmission input shaft 107. The first synchronizer 105 is disposed between the first input end and the output end. The vehicle mode switching system 400 includes a vehicle controllor 401, a transmission controller 402, a motor controller 403, and an engine controller 404.

The vehicle controllor 401 is configured to, when the vehicle satisfies a mode switch condition for switching from the power split mode to the direct drive mode, send a clutch state hold request to the transmission controller 402, send an engine torque regulation request to the engine controller 404, and send a motor torque regulation request to the motor controller 403.

The transmission controller 402 is configured to, in response to the clutch state hold request, maintain the clutch 102 in a closed state.

The engine controller 404 is configured to, in response to the engine torque regulation request, perform torque regulation on the engine 101; the motor controller 403 is configured to, in response to the motor torque regulation request, perform torque regulation on the first motor 103, so that the first synchronizer 105 satisfies a torque condition.

The vehicle controllor 401 is further configured to, when the first synchronizer 105 satisfies the torque condition, send a speed regulation request to the motor controller 403.

The motor controller 403 is further configured to, in response to the speed regulation request, perform speed regulation on the first motor 103, so that the first synchronizer 105 satisfies a speed condition.

The vehicle controllor 401 is further configured to, when the first synchronizer 105 satisfies the speed condition, send a gear shift request to the transmission controller 402.

The transmission controller 402 is further configured to, in response to the gear shift request, control the first synchronizer 105 to shift from the power split gear to the engaged gear, so that the vehicle switches from the power split mode to the direct drive mode.

It should be noted that, for the specific implementation of the vehicle mode switching system 400 according to the embodiment of the present application, reference is made to the specific implementation of the vehicle mode switching method proposed in the first aspect of the present application, and details are not repeated here.

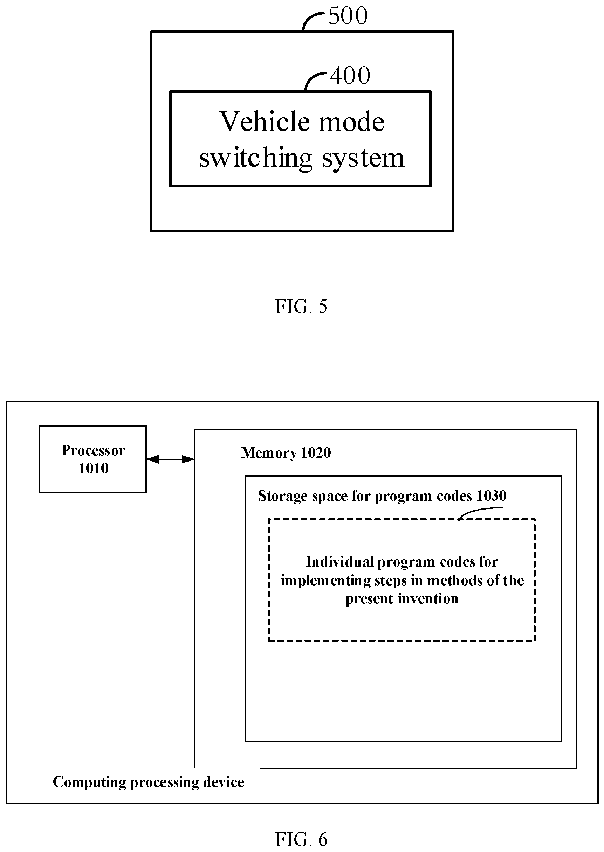

In a fourth aspect, based on the same inventive concept, referring to FIG. 5, an embodiment of the present application provides a vehicle 500, including the vehicle mode switching system 400 proposed in the third aspect of the present application.

It should be noted that, for the specific implementation of the vehicle 500 according to the embodiment of the present application, reference is made to the specific implementation of the vehicle mode switching system 400 proposed in the third aspect of the embodiment of the present application, and details are not repeated here.

The various component embodiments of the present invention may be implemented in hardware, or in software modules running on one or more processors, or in a combination thereof. Those skilled in the art should understand that a microprocessor or a Digital Signal Processor (DSP) may be used in practice to implement some or all functions of some or all components in a computing processing device according to an embodiment of the present invention. The present invention may also be implemented as a device or apparatus program (e.g., a computer program and a computer program product) for executing part or all of the methods described herein. Such a program implementing the present invention may be stored on a computer-readable medium, or may have the form of one or more signals. Such signals may be downloaded from an Internet website, or provided on a carrier signal, or provided in any other form.

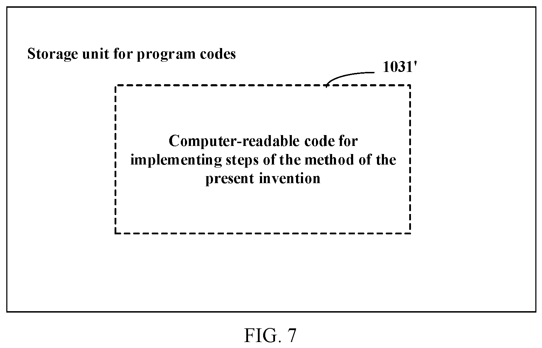

For example, FIG. 6 shows a computing processing device capable of implementing the method according to the present invention. The computing processing device traditionally includes a processor 1010 and a computer program product or computer-readable medium in the form of a memory 1020. The memory 1020 may be an electronic memory such as flash memory, an Electrically Erasable Programmable Read-Only Memory (EEPROM), an Erasable Programmable Read-Only Memory (EPROM), a hard disk, or a read-only memory (ROM). The memory 1020 has a storage space for program codes 1030 for executing any method steps of the above methods. For example, the storage space 1030 for the program codes 1031 may include individual program codes 1031 for implementing the various steps in the above methods, respectively. These program codes may be read from or written to one or more computer program products. These computer program products include program code carriers such as hard disks, compact disks (CDs), memory cards, or floppy disks. Such a computer program product is typically a portable or fixed storage unit as described with reference to FIG. 7. The storage unit may have storage segments, storage spaces, etc., arranged similarly to the memory 1020 in the computing processing device of FIG. XXX. The program code may be compressed in an appropriate form, for example. Typically, the storage unit includes computer-readable code 1031'. That is, code readable by a processor such as 1010. When the computer-readable code 1031' is executed by the computing processing device, the computing processing device is configured to perform the various steps of the methods described above.

Although preferred embodiments of the embodiments of the present application have been described, once those skilled in the art are aware of the basic inventive concept, they can make additional changes and modifications to these embodiments. Therefore, the appended claims are intended to be interpreted as including the preferred embodiments and all changes and modifications falling within the scope of the embodiments of the present application.

Finally, it should also be noted that, in this document, relational terms such as first and second are used merely to distinguish one entity or operation from another entity or operation, and do not necessarily require or imply any such actual relationship or order between these entities or operations. Furthermore, the terms "comprise," "include," or any other variation thereof are intended to cover a non-exclusive inclusion, such that a process, method, article, or terminal device that includes a list of elements includes not only those elements but also other elements not expressly listed, or elements inherent to such process, method, article, or terminal device. Without further limitation, an element defined by the phrase "comprising a ..." does not preclude the existence of additional identical elements in the process, method, article, or terminal device that includes the element.

## Claims

1. A vehicle mode switching method, wherein the vehicle comprises an engine, a clutch, a first motor, and a transmission; the transmission comprises a power split mechanism, a first synchronizer, and a transmission input shaft; the engine is connected to a first input end of the power split mechanism via the clutch; the first motor is connected to a second input end of the power split mechanism; an output end of the power split mechanism is connected to the transmission input shaft; the first synchronizer is disposed between the first input end and the output end; the method comprises:
when the vehicle satisfies a mode switch condition for switching from a power split mode to a direct drive mode, maintaining the clutch in a closed state, and performing torque regulation on the engine and the first motor, so that the first synchronizer satisfies a torque condition;
when the first synchronizer satisfies the torque condition, performing speed regulation on the first motor, so that the first synchronizer satisfies a speed condition;
when the first synchronizer satisfies the speed condition, controlling the first synchronizer to shift from a power split gear to an engaged gear, so that the vehicle switches from the power split mode to the direct drive mode.

2. The vehicle mode switching method according to claim 1, further comprising:
when the vehicle is in the power split mode, acquiring a current State of Charge of a traction battery, and determining whether a driver has a high power demand; and
when it is determined that the driver has the high power demand and the current State of Charge is greater than a charge threshold, determining that the vehicle satisfies the mode switch condition for switching from the power split mode to the direct drive mode.

3. The vehicle mode switching method according to claim 2, wherein the step of determining whether the driver has the high power demand comprises:
acquiring a current throttle opening of an accelerator pedal and a current throttle opening change rate of the accelerator pedal; and
when the current throttle opening is greater than an opening threshold and the current throttle opening change rate is greater than a rate threshold, determining that the driver has the high power demand.

4. The vehicle mode switching method according to claim 1, wherein the step of performing torque regulation on the engine and the first motor comprises:
controlling, based on a preset torque regulationtorque regulation gradient, a current engine torque of the engine and a current motor torque of the first motor to follow a preset first target torque.

5. The vehicle mode switching method according to claim 4, wherein the vehicle further comprises a second motor, and the method further comprises:
determining, based on the current engine torque and the current motor torque, a compensation torque for the second motor;
determining, based on the compensation torque and a current drive torque of the second motor, a target drive torque for the second motor; and
during the torque regulation process for the engine and the first motor, controlling, based on the torque regulationtorque regulation gradient, the second motor to gradually increase from the current drive torque to the target drive torque.

6. The vehicle mode switching method according to claim 4, further comprising:
when a first torque difference between the current engine torque and the first target torque is less than a first torque threshold, triggering timing of a first duration during which the first torque difference is less than the first torque threshold;
when a second torque difference between the current motor torque and the first target torque is less than a second torque threshold, triggering timing of a second duration during which the second torque difference is less than the second torque threshold; and
when the first duration is greater than a first duration threshold and the second duration is greater than a second duration threshold, determining that the first synchronizer satisfies the torque condition.

7. The vehicle mode switching method according to claim 1, wherein the power split mechanism comprises a ring gear, a sun gear, a plurality of planet gears meshed with the ring gear and the sun gear, and a planet carrier rotatably connected to the plurality of planet gears; the planet carrier serves as the first input end and is connected to the engine; the sun gear serves as the second input end and is connected to the first motor; the ring gear serves as the output end and is connected to the transmission input shaft; the first synchronizer is disposed between the planet carrier and the ring gear;
the step of performing speed regulation on the first motor comprises:
when a current gear of the first synchronizer is the power split gear, determining a gear ratio between the planet carrier and the ring gear as a first gear ratio;
determining, based on a current engine speed of the engine and the first gear ratio, a target ring gear speed of the ring gear;
determining, based on the target ring gear speed and a second gear ratio between the ring gear and the sun gear, a target motor speed of the first motor; and
controlling a current motor speed of the first motor to follow the target motor speed.

8. The vehicle mode switching method according to claim 7, further comprising:
determining, based on the current motor speed and the second gear ratio, a current ring gear speed of the ring gear;
determining, based on the current engine torque, a current planet carrier speed of the planet carrier; and
when a speed difference between the current ring gear speed and the current planet carrier speed is less than a speed difference threshold, determining that the first synchronizer satisfies the speed condition.

9. The vehicle mode switching method according to claim 4, wherein the step of, when the first synchronizer satisfies the speed condition, controlling the first synchronizer to shift from the power split gear to the engaged gear comprises:
when the first synchronizer satisfies the speed condition, determining a sum of the first target torque and a preset shift assist torque as a second target torque; and
controlling a current motor torque of the first motor to follow the second target torque, to assist the first synchronizer in shifting from the power split gear to the engaged gear.

10. A vehicle mode switching apparatus, wherein the vehicle comprises an engine, a clutch, a first motor, and a transmission; the transmission comprises a power split mechanism, a first synchronizer, and a transmission input shaft; the engine is connected to a first input end of the power split mechanism via the clutch; the first motor is connected to a second input end of the power split mechanism; an output end of the power split mechanism is connected to the transmission input shaft; the first synchronizer is disposed between the first input end and the output end; the apparatus comprises:
a torque regulation module, configured to, when the vehicle satisfies a mode switch condition for switching from a power split mode to a direct drive mode, maintain the clutch in a closed state, and perform torque regulation on the engine and the first motor, so that the first synchronizer satisfies a torque condition;
a speed regulation module, configured to, when the first synchronizer satisfies the torque condition, perform speed regulation on the first motor, so that the first synchronizer satisfies a speed condition;
a gear shift module, configured to, when the first synchronizer satisfies the speed condition, control the first synchronizer to switch from a power split gear to an engaged gear, so that the vehicle switches from the power split mode to the direct drive mode.

11. A vehicle mode switching system, wherein the vehicle comprises an engine, a clutch, a first motor, and a transmission; the transmission comprises a power split mechanism, a first synchronizer, and a transmission input shaft, the engine is connected to a first input end of the power split mechanism via the clutch, the first motor is connected to a second input end of the power split mechanism, an output end of the power split mechanism is connected to the transmission input shaft, and the first synchronizer is disposed between the first input end and the output end; the system comprises a vehicle controller, a transmission controller, a motor controller, and an engine controller; wherein,
the vehicle controller is configured to, when the vehicle satisfies a mode switch condition for switching from a power split mode to a direct drive mode, send a clutch state hold request to the transmission controller, send an engine torque regulation request to the engine controller, and send a motor torque regulation request to the motor controller;
the transmission controller is configured to, in response to the clutch state hold request, maintain the clutch in a closed state;
the engine controller is configured to, in response to the engine torque regulation request, perform torque regulation on the engine, and the motor controller is configured to, in response to the motor torque regulation request, perform torque regulation on the first motor, so that the first synchronizer satisfies a torque condition;
the vehicle controller is further configured to, when the first synchronizer satisfies the torque condition, send a speed regulation request to the motor controller;
the motor controller is further configured to, in response to the speed regulation request, perform speed regulation on the first motor, so that the first synchronizer satisfies a speed condition;
the vehicle controller is further configured to, when the first synchronizer satisfies the speed condition, send a gear shift request to the transmission controller;
the transmission controller is further configured to, in response to the gear shift request, control the first synchronizer to switch from a power split gear to an engaged gear, so that the vehicle switches from the power split mode to the direct drive mode.

12. A vehicle, comprising the vehicle mode switching system according to claim 11.

13. A computer program, comprising computer-readable codes, wherein when the computer-readable codes are executed on a computing processing device, and the computing processing device is configured to execute the vehicle mode switching method according to any one of claims 1 to 9.

14. A computer-readable medium, wherein the computer program according to claim 13 is stored in the computer-readable medium.
